# EUROPEAN PATENT SPECIFICATION

(11) **EP 1 015 209 B1**
(45) Date of publication and mention of the grant of the patent: **29.09.2004**
(21) Application number: 98932708.5
(22) Date of filing: 17.07.1998
(51) Int. Cl.: B29B 17/00

(54) **METHOD OF BENEFITING FROM WASTE POLYURETHANE FOAM MATERIAL AS AN INPUT MATERIAL IN PRODUCTION OF A COMPOSITE MATERIAL AND COMPOSITE MATERIAL PRODUCED WITH THIS METHOD**
VERFAHREN ZUR VORTEILHAFTEN NUTZUNG VON ABFALLMATERIAL AUS POLYURETHANSCHAUM ALS AUSGANGSMATERIAL ZUR HERSTELLUNG EINES VERBUNDWERKSTOFFS UND SO HERGESTELLTER VERBUNDWERKSTOFF
PROCEDE PERMETTANT DE RECYCLER DES DECHETS D'UN MATERIAU ALVEOLAIRE DE POLYURETHANE COMME MATIERE DE DEPART DANS LA PRODUCTION D'UN MATERIAU COMPOSITE ET MATERIAU COMPOSITE PRODUIT SELON CE PROCEDE

(30) Priority: 18.07.1997 TR 9700663
(43) Date of publication of application: 05.07.2000
(73) Proprietor: Arcelik A.S., 81719 Istanbul (TR); Yekas Yeniden Kazanma Ticaret ve Sanayi A.S., 81719 Istanbul (TR)
(72) Inventor: TUNCEL, Suat, H., 81719 Istanbul (TR); MAHIROGLU, Fuat, 81719 Istanbul (TR)
(74) Representative: LOUIS- PÖHLAU- LOHRENTZ
(86) International application number: PCT/TR1998/000013
(87) International publication number: WO 1999/003661

(56) References cited:
- US-A- 5 308 898
- PATENT ABSTRACTS OF JAPAN, Vol. 18, No. 348, (M-1630), 1994; & JP,A,06 087 133 (INOAC CORP.) 29 March 1994.
- PATENT ABSTRACTS OF JAPAN, Vol. 96, No. 12, 1996; & JP,A,08 216 811 (KANSEI CORP.) 27 August 1996.

## Description

This invention is related to the method of benefiting from waste polyurethane foam material which is one of the used refrigerator material as an input material in production of a composite material and the composite material produced with this method.

As the wealth of the society increases, certain durable goods, especially the refrigerator salvage will increase and the continuous accumulation of thermoset materials like polyurethane foam that does not have the possibility of melting and re-using will cause a negative condition in the world.

The materials of the refrigerators completing their usage period or salvaged during manufacturing are recycled at a large degree. Metal materials and, polymeric materials that can be put into a shape with a thermoplastic technique are separated from the salvage and recycled in the industry. Since the polyurethane foam used as an isolation material in refrigerators is a thermoset, it can not be melted and used again. The widely used method for disposing polyurethane foam in the industry, is to burn them or bury them into the soil. With both of the method, the material is not recycled but wasted.

Within the scope of the studies directed not to waste the waste polyurethane, in the patent US5451376, the waste polyurethane is mixed as a raw material with unprocessed polyurethane.

DE 44 40 760 A1 discloses a method for manufacturing containers of composite material consisting of cardboard, aluminium and polyethylene by the steps of breaking, compressing and heating comminuted cardboard beverage boxes.

The objective of this invention is to regain the polyurethane foams that are recovered from the used refrigerator material and benefit from the polyurethane foam material, as an input in a composite material production.

The object of the instant invention is solved by a method pursuant to claim 1 and a composite material pursuant to claim 4.

This invention, is based on the principle of compressing ground waste polyurethane foam material under mechanic pressure and heat effect and bonding to each other via polyethylene present in the mixture.

To achieve this, the waste polyurethane foam is mixed with another waste obtained from the pieces of cardboard boxes, e.g. beverage boxes, containing polyethylene to obtain a composite material. The polyethylene in the mixture functions as the bond former.

The polyurethane foams in salvaged refrigerators, after being disassembled from the body of the refrigerator, are broken into pieces with a breaking machine having rotating blades and it is sieved such that its largest particles have the size of 7-8 mm in length.

Then, waste cardboard boxes put into pieces are mixed with the particles of the waste polyurethane foam material, and the mixture is compressed and heated.

The cardboard beverage boxes include starting from the outside layer, polyurethane film, card board, polyethylene film, aluminum film(0.7-0.8 micron) and polyethylene film layers.

The waste material of cardboard beverage boxes containing polyethylene is composed of, with respect to its weight, 70-75% paper, 20-25% polyethylene and 3-5% aluminum.

The composite material is kept under pressure three times for a period of seven minutes each in a press having mold dimensions at about 1150 mm x 2200 mm. During each seven minutes period, pressure is cut for one minute at the maximum and the water vapor and gases formed in the mold are discharged out. During this pressing operation, 300 tons pressure is applied to the surfaces and the temperature is about 170-180°C.

During the last pressing operation which is cold pressing and the final one, by using a separate pressed, the composite material is pressed for twenty minutes with 170-180 tons of pressure. After this, the composite material is removed from the mold in form of a plate and stocked horizontally.

## Claims

1. A method for producing a composite material comprising the steps of:
- breaking waste polyurethane foam material into pieces in a breaking machine,
- sieving the pieces of the waste polyurethane foam material,
- putting into pieces waste cardboard boxes containing polyethylene,
- mixing the pieces of the waste polyurethane foam material with the pieces of the waste cardboard boxes containing polyethylene,
- compressing the mixture under mechanic pressure and heat to enable the bonding to each other via polyethylene.

2. A method for producing a composite material as in claim 1, further comprising the steps of:
- stopping the compression for enabling the water vapour and gases to be discharged.

3. A method for producing a composite material as in claim 1, further comprising the steps of:
- cold pressing after the compression.

4. A composite material comprising ground waste polyurethane foam material, for example obtained from used refrigerators, and another waste material obtained from pieces of cardboard boxes containing polyethylene, as obtained by a method according to any one of the claims 1 through 3.

5. A composite material as in claim 4, **characterised in that** the waste material obtained from the cardboard boxes containing polyethylene is composed of, with respect to its weight, 70 to 75 % paper, 20 to 25 % polyethylene and 3 to 5 % aluminium.

## Patentansprüche

1. Verfahren zum Herstellen eines Verbundmaterials, umfassend die Schritte:
- Auseinanderbrechen von Polyurethanschaum-Abfallmaterial in Stücke in einer Brechmaschine,
- Sieben der Stücke des Polyurethanschaum-Abfallmaterials,
- Zerkleinern von Abfallpappkartons, die Polyethylen enthalten, in Stücke,
- Mischen der Polyurethanschaum-Abfallmaterial-Stücke mit den Abfallpappkarton-Stücken, die Polyethylen enthalten,
- Verdichten der Mischung unter mechanischem Druck und Erhitzen, um die Bindung untereinander mittels Polyethylen zu ermöglichen.

2. Verfahren zum Herstellen eines Verbundmaterials gemäß Anspruch 1, ferner umfassend die Schritte:
- Beenden der Verdichtung, um zu ermöglichen, dass der Wasserdampf und Gase abgelassen werden.

3. Verfahren zum Herstellen eines Verbundmaterials gemäß Anspruch 1, ferner umfassend die Schritte:
- Kaltpressen nach der Verdichtung.

4. Verbundmaterial, umfassend gemahlenes Polyurethanschaum-Abfallmaterial, das beispielsweise aus gebrauchten Kühlschränken erhalten wurde, und weiteres Abfallmaterial, das aus Pappkartonstücken, die Polyethylen enthalten, erhalten wurde, erhalten nach einem Verfahren gemäß einem der Ansprüche 1 bis 3.

5. Verbundmaterial gemäß Anspruch 4,
**dadurch gekennzeichnet,**
**dass** sich das Abfallmaterial, das aus den Polyethylen-enthaltenden Pappkartons erhalten wurde, aus 70 bis 75 Gew.-% Papier, 20 bis 25 Gew.-% Polyethylen und 3 bis 5 Gew.% Aluminium zusammensetzt.

## Revendications

1. Une méthode pour la fabrication d'un matériau composite comprenant les étapes consistant à :
- concasser des déchets de mousse de polyuréthane en petits morceaux dans une machine de concassage,
- tamiser les morceaux de débris de mousse de polyuréthane,
- mettre en pièces des déchets de boîtes en carton contenant du polyéthylène,
- mélanger les morceaux de débris de mousse de polyuréthane avec les morceaux de débris de boîtes en carton contenant du polyéthylène,
- comprimer le mélange sous pression mécanique et chauffage de manière à permettre leur réunion les uns aux autres par l'intermédiaire du polyéthylène.

2. Une méthode de production d'un matériau composite selon la revendication 1 comprenant au surplus l'étape consistant à :
- interrompre la compression de manière à permettre à la vapeur d'eau et aux gaz d'être expulsés.

3. Une méthode pour la fabrication d'un matériau composite selon la revendication 1 comprenant au surplus l'étape consistant à :
- comprimer à froid après la compression.

4. Un matériau composite comprenant des déchets broyés de mousse de polyuréthane par exemple obtenu à partir de réfrigérateurs mis au rebus et d'autres matériaux en débris obtenus à partir de boîtes en carton contenant du polyéthylène, matériau obtenu par une méthode selon l'une quelconque des revendications 1 à 3.

5. Un matériau composite selon la revendication 4, **caractérisé en ce que** le matériau en débris obtenu à partir des boîtes en carton contenant du polyéthylène se compose en poids, de 70 à 75% de papier, 20 à 25% de polyéthylène et 3 à 5% d'aluminium.
